Europäisches Patentamt

(19) European Patent Office

Office européen des brevets

(11) Publication number: **0 164 968**

**A1**

(12) # EUROPEAN PATENT APPLICATION

(21) Application number: **85303843.8**

(22) Date of filing: **31.05.85**

(51) Int. Cl.⁴: **F 16 C 19/20**
**F 16 C 19/40, F 16 C 33/66**

(30) Priority: **01.06.84 US 616549**

(43) Date of publication of application:
**18.12.85 Bulletin 85/51**

(84) Designated Contracting States:
**DE FR GB**

(71) Applicant: **DRESSER INDUSTRIES,INC.**
**The Dresser Building Elm & Akard Streets P.O. Box 718**
**Dallas Texas 75221(US)**

(72) Inventor: **Hambric, James Clement**
**2894 Florida Avenue**
**Wellsville New York(US)**

(74) Representative: **Goodenough, Nigel et al,**
**A.A. Thornton & Co. Northumberland House 303-306**
**High Holborn**
**London WC1V 7LE(GB)**

(54) **High speed lubricated bearing unit.**

(57) A bearing unit e.g. for a planetary gear transmission includes inner (30) and outer (31) coaxial rings forming respective inner (32) and outer (33) raceways separated by an annular gap (34). A plurality of rotary bodies e.g. rollers (36) are engaged in the raceways and are alternatively disposed with a plurality of wedge-shaped separators (37) in an annular array within the gap. Each of the separators is provided with radially extending grooves (41) to channel lubricant between the sliding elements of the bearing units of effect the formation of an elastohydrodynamic lubricating film of a predetermined thickness between the sliding elements during use of the bearing unit. The radius (R4) of the separator bearing surface (39) is greater than the radius of the rollers (36). The radially outer surface (38) of the separators is convex and has a radius (R1) less than the radius (R1) less than the radius (R2) of the outer raceway (33) to form a lubricant (46) film therebetween.

FIG.5

0164968

- 1 -

## HIGH SPEED LUBRICATED BEARING UNIT

This invention relates to a high speed lubricated bearing unit and in the preferred embodiment provides a bearing unit for high load applications such as encountered in jet engines, electrical power generating systems, and planetary gearing arrangements.

As is well known in the art, in the typical ball or roller bearing unit the rolling elements are retained in a circular array between a pair of concentric raceways. In order to minimize interference or friction between the rolling elements, some means is usually provided for spacing apart the rolling elements within the array. This can be in the form of a single fixed cage which retains all of the rolling elements within the array such as found in the ball or roller bearing unit used in a common bicycle wheel, or alternatively, in the form of a plurality of spacers or separators interposed between the rolling elements of the array. U.S. Patent Nos. 260,585, 2,071,797 and 4,175,805 are fairly typical of the latter type of arrangement. Each of those patents discloses a bearing unit having a plurality of separators interposed between its respective rolling elements.

In high speed bearing applications, experience has demonstrated that it is generally very difficult to maintain adequate lubrication of the rolling elements in either of the foregoing designs. Moreover, it has generally been necessary to finish the surfaces of the bearing elements in sliding contact to an RMS finish in the range of 4-6 x $10^{-6}$ in. This has been particularly the case when the rolling elements of the bearing unit are subjected to varying oscillating loads such as encountered in planetary gearing arrangements, jet aircraft engines, and related applications where the rolling elements are subjected to high g loads independent of the rotation of the bearing unit about its own axis. Illustrating the severity of these conditions, analysis has indicated that the loads on each of the rolling elements of the bearing units in a planetary gearing arrangement of the drive train interconnecting the steam turbine to the generator of a fairly typical electrical generating system oscillate in a range between 550 and 1350 g's. Essentially the same type of problem is encountered in jet aircraft engines when the aircraft goes through various aerobatic manuevers. In either event, maintaining adequate circulation of lubricant within the bearing under such conditions has clearly been an ongoing problem.

According to one aspect of the invention there is provided a high speed lubricated bearing unit, comprising: inner and outer coaxial members forming respective inner and outer raceways separated by an annular gap; a plurality of spaced rotary bodies engaged in the raceways in an annular array in said gap; and a plurality of free floating separators alternately disposed within the array between each of the rotary bodies, said separators each having a concave bearing contact surface on each of its peripheral sides within the array slidingly engaging its respective adjacent rotary body in a generally contiguous fashion to maintain a predetermined spacing between the rotary bodies within the array, and each of said bearing surfaces having a radius of curvature greater than the radius of curvature of its respective adjacent rotary body and at least one radially extending groove for channeling lubricant during use of the bearing unit between the bearing surface and said rotary body to form a lubricant film of a predetermined minimum thickness between the separators and the rotary bodies.

The preferred embodiments of the invention provide bearing units which promote the development of an elastohydrodynamic or EHD lubricating film between the various elements of the bearing units to facilitate use in high load applications.

The preferred bearing unit includes inner and outer coaxial rings forming respective inner and outer raceways separated by an annular gap, and a plurality of rotary bodies engaged in the raceways alternately disposed with a plurality of wedge-shaped separators in an annular array within the gap to maintain a predetermined spacing between the rotary bodies. Each of the separators is formed with concave bearing surfaces which slidingly engage their respective adjacent rotary bodies, and at least one radially extending lubricating groove is provided in each of the bearing surfaces to channel lubricant from the inner raceway to accommodate the formation of an EHD lubricating film of a predetermined thickness between the bearing surfaces and the rotary bodies. This arrangement has been found to essentially eliminate lubricant starvation between the sliding surfaces of the bearing unit, while at the same time minimizing frictional losses within the unit. This of course can be extremely important when the bearing units are used in electrical power generating systems and the like where reliability and efficiency are imperative for economic operation of the system.

The preferred embodiments of the invention are relatively inexpensive and easily fabricated. Specifically, by effecting the formation of an EHD lubricating film between the sliding components of the bearing unit, rougher surface finishes can be used on the sliding elements of the bearing unit than has been the case with the bearing units heretofore available. This has been found to significantly enhance the service life of the bearing unit while at the same time simplifying its repair and replacement.

In addition to the above, a preferred embodiment of the invention provides separators of a resilient material to absorb and dampen impact loading between the rotary bodies during use. Such loading will typically be encountered as a result of the constant acceleration and deceleration of the rotary bodies when the bearing unit is used to support an orbiting shaft in a planetary transmission or the like. This in turn reduces wear and fatigue of the rotary bodies and thus similarly enhances the reliability and service life of the unit.

The preferred embodiments of the invention provide high speed bearing units which have proven to be particularly reliable and efficient in high load applications such as encountered in jet engines, power generating systems, and related planetary gearing arrangements. Moreover, the bearing unit is of a relatively inexpensive, straight-forward and easily manufactured construction; however, it is to be understood that numerous other advantages and features of the invention will become readily apparent from the following description, claims, and drawings of various embodiments of the invention.

## DESCRIPTION OF THE DRAWINGS

Fig. 1 is a vertical cross-sectional view of a planetary transmission incorporating the bearing unit embodying the invention;

Fig. 2 is a cross-sectional view taken substantially along line 2-2 in Fig. 1;

Fig. 3 is a cross-sectional view taken substantially along line 3-3 in Fig. 1;

Fig. 4 is an enlarged cross-sectional view taken substantially along line 4-4 in Fig. 1;

Fig. 5 is a further enlarged partial cross-sectional view similar to Fig. 4 showing the details of the interface between one of the bearing separators and the bearing rollers;

Fig. 6 is a partial cross-sectional view taken substantially along line 6-6 in Fig. 4;

Fig. 7 is a perspective view of the bearing separator shown in Figs. 5 and 6;

Fig. 8 is a view similar to Fig. 5 showing a second embodiment of the invention;

Fig. 9 is a partial cross-sectional view taken substantially along line 9-9 in Fig. 8;

Fig. 10 is a perspective view of the bearing separator shown in Figs. 8 and 9;

Fig. 11 is another view similar to Fig. 5 showing a third embodiment of the invention;

Fig. 12 is a partial cross-sectional view taken substantially along line 12-12 in Fig. 11;

Fig. 13 is a perspective view of the bearing separator shown in Figs. 11 and 12;

Fig. 14 is yet another view similar to Fig. 5 showing a fourth embodiment of the invention;

Fig. 15 is a partial cross-sectional view taken substantially along line 15-15 in Fig. 14;

Fig. 16 is a perspective view of the bearing separator shown in Figs. 14 and 15;

Fig. 17 is still another view similar to Fig. 5 showing a fifth embodiment of the invention;

Fig. 18 is a partial cross-sectional view taken substantially along line 18-18 in Fig. 17; and

Fig. 19 is a partial cross-sectional view taken substantially along line 19-19 in Fig. 18.

## DESCRIPTION OF THE PREFERRED EMBODIMENT

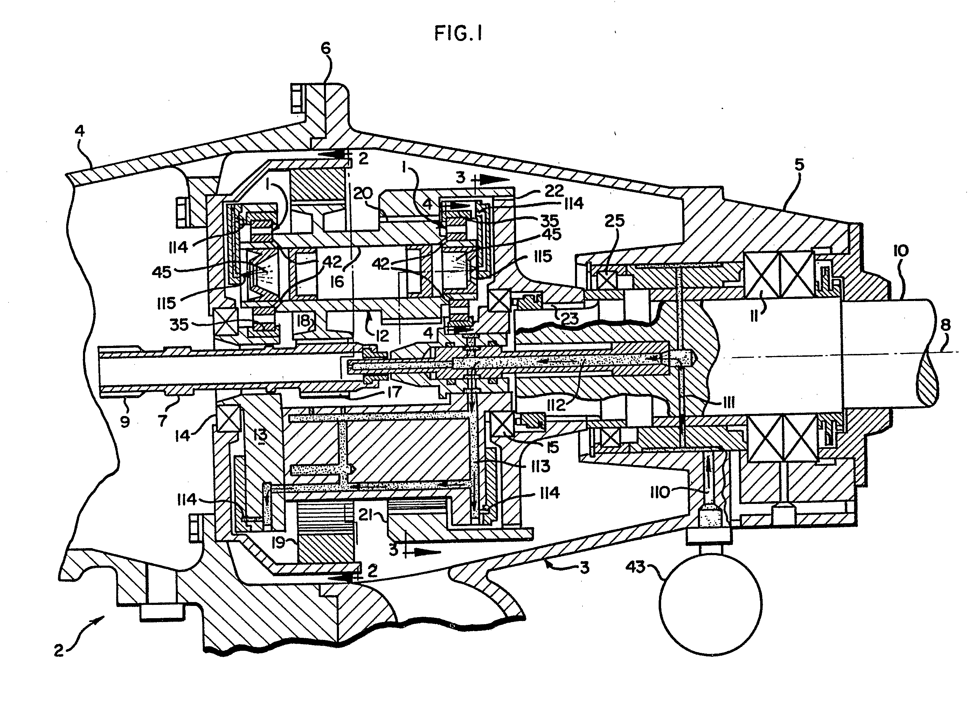

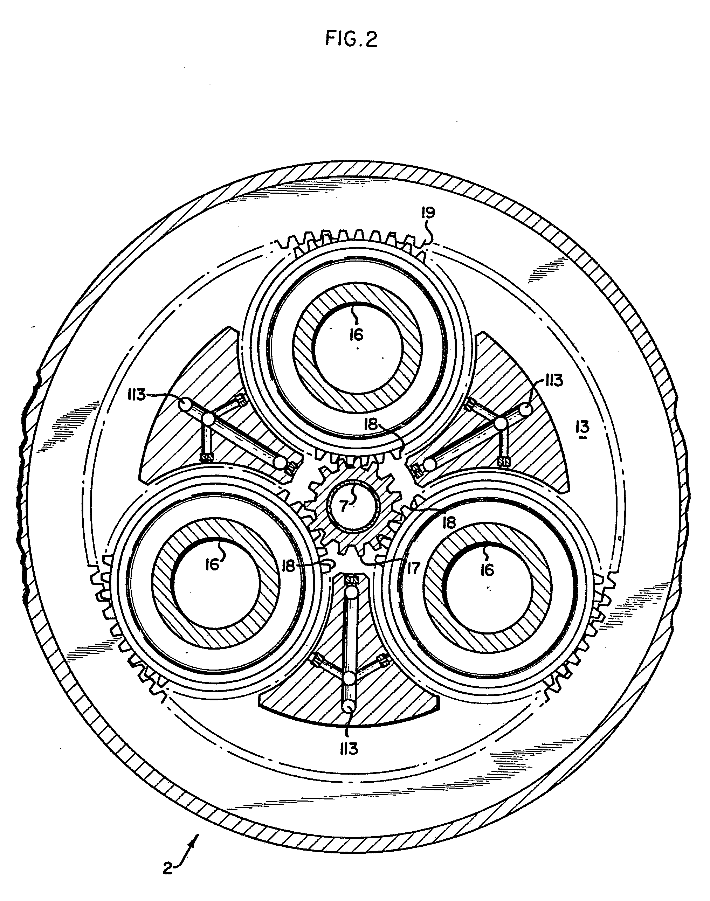

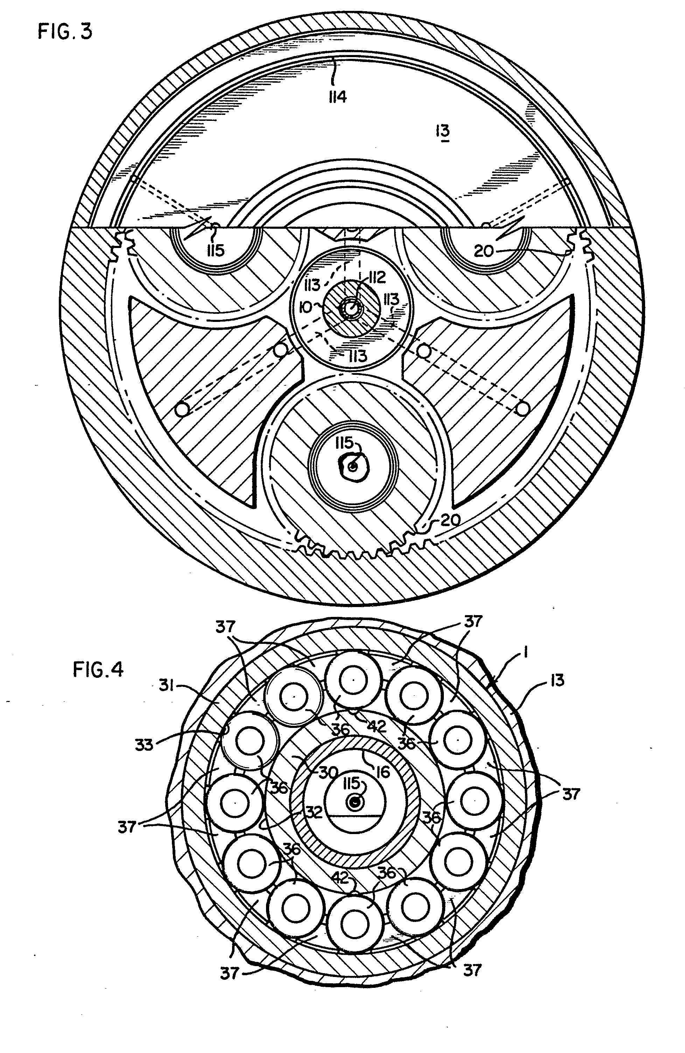

Referring to Figs. 1-7, the high speed lubricated bearing unit 1 embodying the invention is shown in a planetary gearing apparatus or transmission 2. As will be recognized by those skilled in the art, the transmission 2 is adapted for use in the drive train interconnecting a steam turbine to an electrical generator in an electrical power generating system. However, it is to be understood that this particular use of the bearing unit 1 is merely illustrative of one application of the invention and is not intended to limit the invention to this specific embodiment.

The transmission 2 is housed within a generally cylindrical, vertically split casing 3 formed of frustoconically shaped inboard and outboard segments 4 and 5 secured together as generally indicated at 6 in the drawings. As is well known in the art, an input shaft 7 is mounted within the inboard segment 4 for rotation along the axis 8 of the transmission 2 which is adapted to be coupled to the steam turbine via spline gear 9, and an output shaft 10 is similarly mounted for rotation within a bearing 11 carried by the outboard casing segment 5. Thus, by interconnecting the input and output shafts 7 and 10 with suitable planetary gearing 12, the output speed of the transmission 2 can be designed to match the speed required for a particular generator load.

The planetary gearing 12 includes a carrier assembly 13 which is mounted for rotation about the axis 8 on a pair of roller bearings 14 and 15 carried by the inboard casing segment 4 and the output shaft 10, respectively. The carrier assembly 13 in turn supports and carries three planetary gear shafts 16 which are symetrically disposed about the axis 8 and are rotatably supported at each of their ends by one of the bearing units 1 secured within the carrier assembly 13. As shown in Figs. 1-3, a star gear 17 is provided on the end of the input shaft 7 which meshes with a first planetary gear 18 on each of the planetary. gear shafts 16 which in turn meshes with a stationary ring gear 19 secured to the inboard casing segment 4. The planetary gear shafts 16 are in turn connected to the output shaft 10 through a second planetary gear 20 on each of the gear shafts 16 which meshes with a rotatable ring gear 21 secured to the output shaft 10 through suitable splined joints 22 and 23 to complete the gear train through the transmission.

From the foregoing, it can be seen that rotation of the input shaft 7 will effect rotation of the carrier assembly 13 in the same direction as the input shaft 7 while rotating each of the planetary gear shafts 16 in an opposite direction at a speed in proportion to the gear ratios of the star and first planetary gears 17 and 18. The resultant of this rotation is in turn transferred through the second planetary gears 20 and the ring gear 21 to the output shaft 10 as is well known in the art. In this regard, the nature and magnitude of the g loads on the bearing unit 1 which are induced by this rotation should be particularly noted. For example, in the transmission shown, the carrier assembly 13 rotates at about 2700 rpm. This creates a g load attributable to the rotation of the carrier assembly which must be supported by the bearing units 1. In addition to this loading the bearing units 1 must also carry the g loads created by the rotation of the planetary gear shafts 16 about their own axis which in this case is about 6500 rpm. Thus, the resultant g loading on each of the bearing units 1 typically oscillates between about 550 and 1350 g's during operation of the transmission.

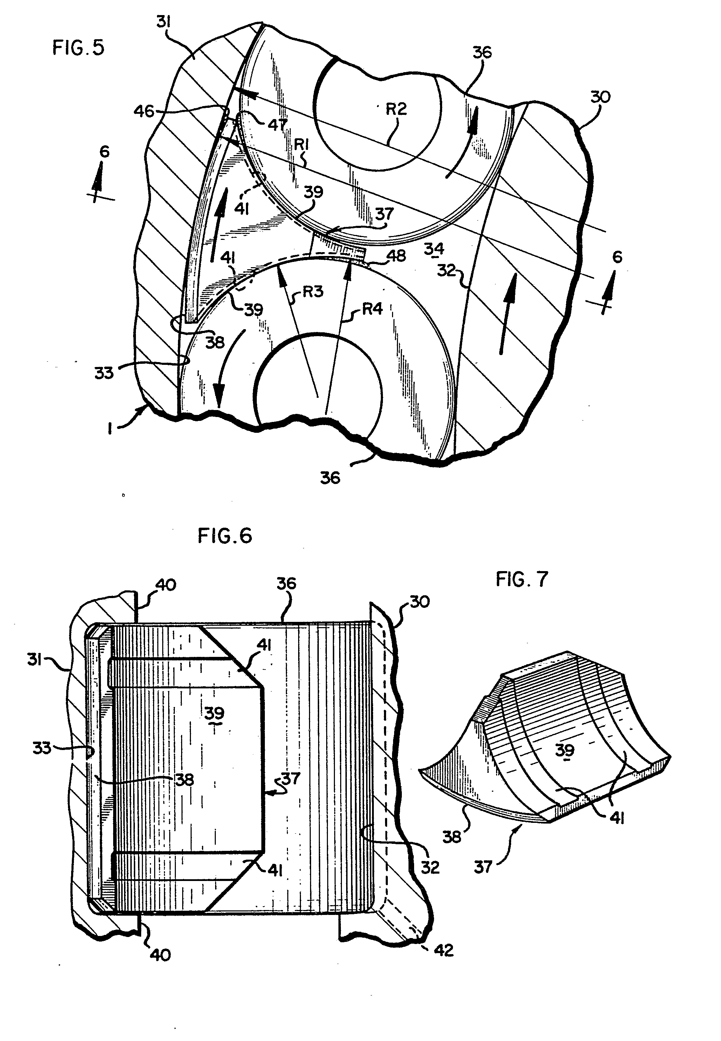

Referring to Fig. 4, each of the bearing units 1 is provided with inner and outer coaxial rings 30 and 31 forming respective inner and outer raceways 32 and 33 separated by an annular gap 34. The outer rings 31 are secured in a suitable bore or aperture 35 at each end of the carrier assembly 13, and the inner rings 30 are integrally formed in the ends of the planetary gear shafts 16, although it is to be understood that the inner rings 30 can also be fabricated as entirely separate members which can be secured about the ends of the gear shafts 16.

As shown in the drawings, a plurality of hollow crowned hardened steel rollers 36 are engaged in the raceways 32 and 33 in an annular array within the gap 34, and a plurality of free floating spacers or separators 37 of a generally wedge-shaped configuration are disposed within the array between each of the rollers 36. Each of the separators 37 has a radially outwardly convex outer surface 38 slidingly engaged in the outer raceway 33, and a concave bearing contact surface 39 on each of its peripherial sides which slidingly engages its respective adjacent roller 36 in a generally contiguous fashion to maintain a predetermined spacing between the rollers 36 within the array. Both the rollers 36 and the separators 37 are axially retained within the bearing unit 1 by a pair of inwardly projecting rims or lodgements 40 formed in the outer ring 31. Additionally, for reasons which will be discussed, it should be noted that each of the separators 37 is plated with a silver coating or other suitable material which is softer than the hardened steel rollers 36.

To insure an adequate supply of lubricant is maintained between the contacting elements of the bearing unit, a pair of radially extending parallel grooves 41 are formed in each of the bearing contact surfaces 39. Additionally, each of the separators 37 is formed so that the radius of curvature

R1 of the outer surface 38 is slightly less than the radius R2 of the outer raceway 33, and the radius R3 of the rollers 36 is slightly less than the radius of curvature R4 of each of the contact surfaces 39. For example, in one of the embodiments tested, R1 was about 2.9100 in., R2 2.9115 in., R3 0.4920 in. and R4 0.5040 in. while the grooves 41 were formed to extend entirely across the contact surface 39 at a depth of slightly more than 0.01 in. and a width of about 0.05 in. As will be described, this structure maintains separation of the rollers and provides guidance in a true circular sense for the separators as they move along the outer raceway while essentially assuring adequate lubrication of the bearing unit during high speed operations.

Referring to Figs. 1-4, the invention provides for directing lubricant into the bearing units 1 through a plurality of ports or passages 42 extending through the inner rings 30 which open into the inner raceways 32. In the embodiment shown, lubricant is conducted from a pressurized lubricant reservoir 43 through a series of passages 110, 111, 112, 113, and 114 in the transmission 2 and injected through nozzles or orifices 115 into the hollow interiors 45 of each end of the planetary gear shafts 16 where centrifugal force causes the lubricant to flow through the passages 42 into the inner raceways 32 to lubricate the bearing units 1. Although it is not precisely clear how the lubrication process works within each of the bearing units 1, testing has indicated that the grooves 41 effectively circulate lubricant from the inner raceway 32 between the bearing contact surfaces 39 and the surface of the rollers 36, as well as to the outer raceway 33, to form an elastohydrodynamic, or EHD, lubricant film between the separators and the rollers and the separators and the outer raceway. This EHD film is constantly fed and maintained with lubricant flowing through the grooves 41 during high speed operations and essentially assures complete lubrication between all of the sliding surfaces within the bearing unit. Moreover, the relative sliding movement between the rollers and the separators and between the separators and the outer raceway tends to create a localized reservoir of lubricant ahead of the movement of those elements as schematically indicated at 46, 47 and 48 when they are moving in the directions indicated by the arrows in Fig. 5, and visa versa when moving in the opposite direction.

During development of the bearing unit 1, it was determined that the composite surface roughness of the various sliding surfaces of the bearing elements in the bearing unit 1 should not be greater than about 20 percent of the minimum EHD lubricant film thickness as approximated by the following equation:

$$h_{min.} = 3.63R \left[\frac{mV(1-p^2)}{RE}\right]^{0.68} \left[\frac{a\,E}{1-p^2}\right]^{0.49} \left[1 - e^{-0.68k}\right] \left[\frac{F(1-p^2)}{RE}\right]$$

Where:

$h_{min}$ = minimum EHD lubricant film thickness, in.

R = effective equivalent radius of contacting bearing elements, in.

m = dynamic viscosity of the lubricating oil at the temperature at the inlet to the bearing unit, $lb.sec./in.^2$

V = surface velocity of contacting bearing elements, in./sec.

p = Poisson's ratio

E = Young's modules of elasticity, psi

a = pressure viscosity coefficient of the lubricating oil at the temperature at the inlet to the bearing unit, $in.^2/lb.$

e = base of natural logarithm (approximately 2.7183)

k = ellipticity parameter for contacting bearing elements

F = load between contacting bearing elements, lbs.

Thus, given that the composite surface roughness of the two contacting surfaces can be determined by the equation:

$$A = (S_1^2 + S_2^2)^{1/2}$$

Where:

A = composite surface roughness RMS, in.

$S_1$ = surface roughness RMS of one of the contacting surfaces, in.

$S_2$ = surface roughness RMS of the other contacting surface, in.

it can be seen that the invention contemplates a fairly wide range of surface finishes for the various elements of the bearing unit. For example, assuming the foregoing formula indicates that the minimum EHD film will be approximately $85 \times 10^{-6}$ in., the RMS of the composite surface roughness should preferably be no greater than about $17 \times 10^{-6}$ in. Thus, if the RMS of the surface roughness of one element was $12 \times 10^{-6}$ in., the RMS of the the surface roughness of the other element should be about $12 \times 10^{-6}$ in. However, if the RMS of the surface roughness of one of the elements could easily be finished to $6 \times 10^{-6}$ in., the other element could simply be finished to a rougher but more easily fabricated and less expensive finish having an RMS of $16 \times 10^{-6}$ in. while still maintaining 100 percent lubrication within the bearing unit.

When considering the foregoing, it must be kept in mind that it generally takes a few minutes to bring the transmission 2 up to its normal operating speed, and similarly, about the same amount of time to stop it. Under normal operating conditions, the relative surface velocity V between the contacting bearing elements will be in a range of 500-800 in./sec. However, as can be seen from the foregoing equation used for determining the minimum EHD lubricant film thickness, $h_{min.}$, as the velocity decreases, so does the film thickness. At velocities below about 80 in./sec., analysis has indicated that an effective film essentially disappears. During normal start-up and shut-down operations this generally does not create any difficulties given the nature of the lubrication required at such low speeds. However, to assure complete lubrication between the contacting bearing elements prior to the development of an effective EHD film, or alternatively during shut-down operations, the invention calls for coating each of the separators 37 with a silver plating or other suitable material which is softer than the hardened steel rollers 36. Testing has indicated this provides a self-lubricating coating which essentially eliminates the possibility of the bearing elements overheating or scoring during start-up or shut-down operations.

### DESCRIPTION OF THE ALTERNATIVE EMBODIMENTS

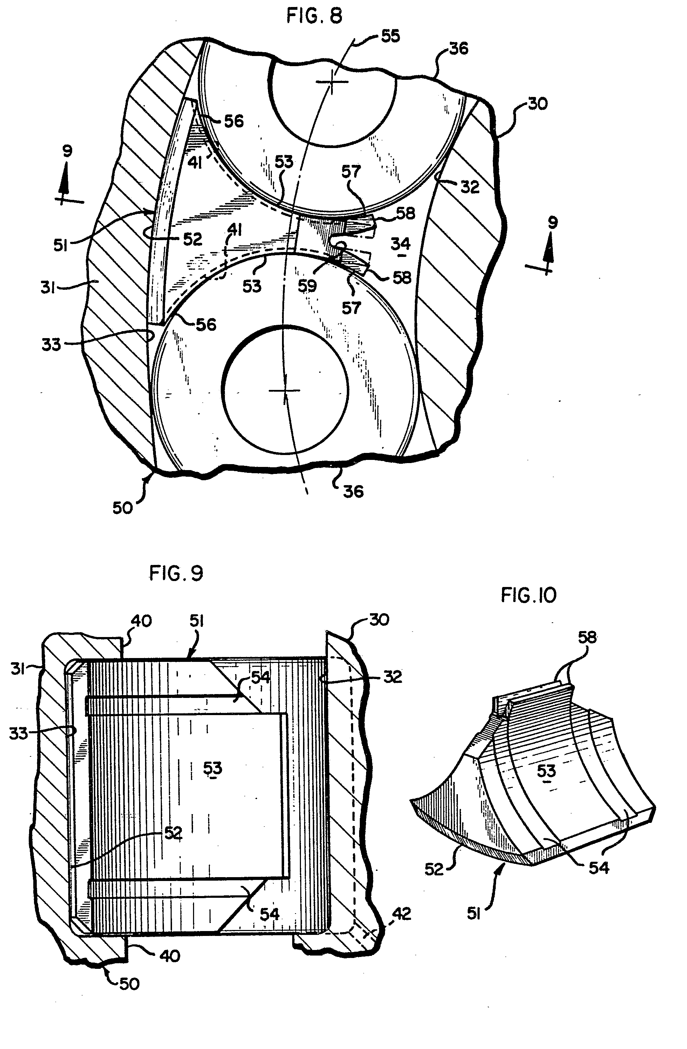

Figures 8-10 show a second embodiment of the invention wherein a bearing unit 50 is provided with a plurality of free floating separators 51 disposed between a plurality of crowned rollers 36 engaged in the raceways 32 and 33, it being noted that in these and subsequent drawings elements corresponding to those shown in Figs. 1-7 are identified by the same numerals.

Each of the separators 51 is of a generally wedge-shaped configuration having a radially outwardly convex outer surface 52 slidingly engaged in the outer raceway 33, and a concave bearing contact surface 53 on each of its peripheral sides which slidingly engages its respective adjacent roller 36 in a generally contiguous fashion to maintain a predetermined spacing between the rollers 36 within the array. As in the case of the first embodiment, a pair of parallel grooves 54 are formed in each of the bearing surfaces 53 to channel lubricant between the separators and the rollers. Additionally, both the rollers 36 and the separators 51 are axially retained within the bearing unit 50 by the inwardly projecting rims or lodgements 40 formed in the outer ring 31.

As shown in the drawings, each of the separators 51 is formed so that its respective bearing contact surfaces 53 embrace the rollers 36 radially inwardly and outwardly of the path followed by the center of the rollers 36 as they move about the inner raceway 32 as generally illustrated by the phantom line 55 in Fig. 8. This structure provides a means of radially entrapping each of the rollers 36 between the opposing portions of the bearing surfaces as indicated at 56 and 70 to secure the rollers within the assembly. This is accomplished by initially forming the separator 51 with parallel tabs 58 separated by a slot 59 as shown in phantom lines in Fig. 8 and then assemblying the bearing unit. After this is accomplished the tabs 58 are bent outwardly to the position shown in solid lines to secure the separators 51 and the rollers 36 within the assembly. This arrangement results in the bearing unit 50 functioning in essentially the same fashion as a bearing having a single piece cage.

It should be noted that the separators 51 are formed so the minimum spacing between the rollers 36 exists approximately halfway between the inner and outer raceways 32 and 33. This configuration has been found to reduce the radially directed loads on the separators during use of the bearing unit which in turn reduces the frictional losses between the outer surfaces 52 and the outer raceway 33.

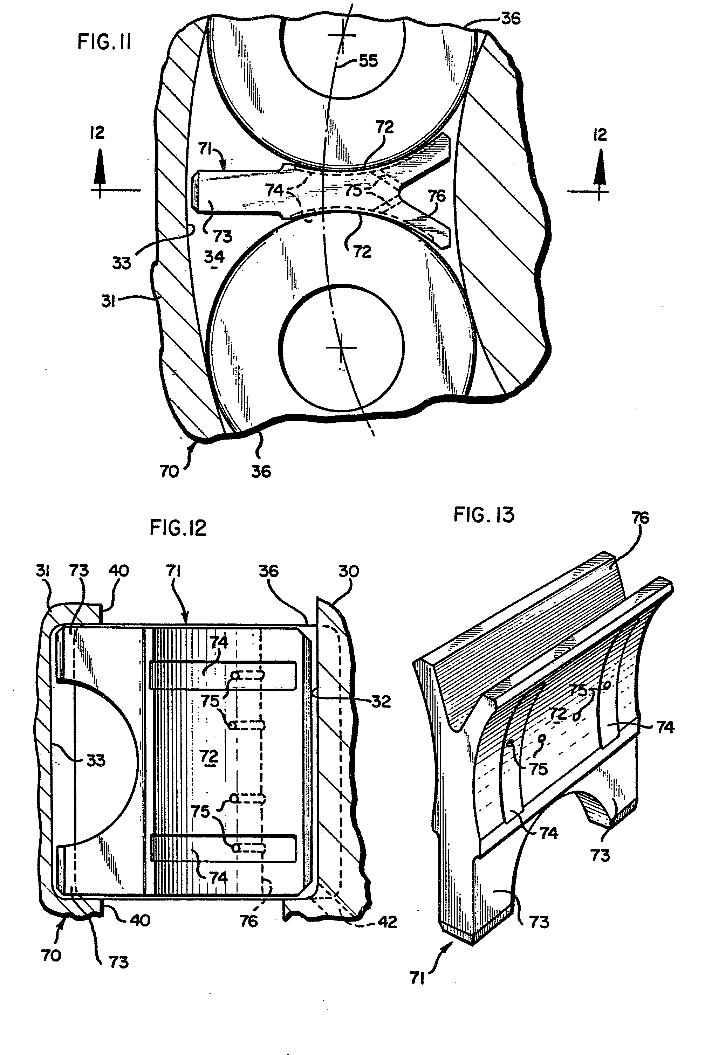

Figs. 11-13 show a third embodiment of the invention wherein a bearing unit 70 is provided with a separator 71 which is completely isolated from the outer raceway 33. This arrangement obviously does not incur any significant frictional losses between the separator 71 and the outer raceway 33. As in the case of the second embodiment, each of the separators 71 is formed so that its respective concave bearing contact surfaces 72 embrace the rollers 36 radially inwardly and outwardly of the path followed by the center of the rollers 36 as they move about the inner race 32 as indicated by the phantom line 55 in Fig. 11, and with an outer edge portion 73 spaced radially inward from the outer raceway 33 positioned between the inwardly projecting lodgements 40. This structure effectively entraps and secures the rollers 36 and the separators 71 within the assembly.

As in the case of each of the foregoing embodiments, each of the separators 71 are provided with a pair of parallel lubricating grooves 74 in each of its bearing contact surfaces 72. However in contrast to those embodiments, a plurality of lubricant passages 75 are provided in the separator which accommodate the flow of lubricant into the grooves 74 from a generally v-shaped lubricant collecting zone 76 formed in the inner surface of the separator. This structure serves to collect and channel lubricant thrown off the inner raceway to the bearing surfaces during use of the bearing unit, thereby effectively assuring its complete lubrication.

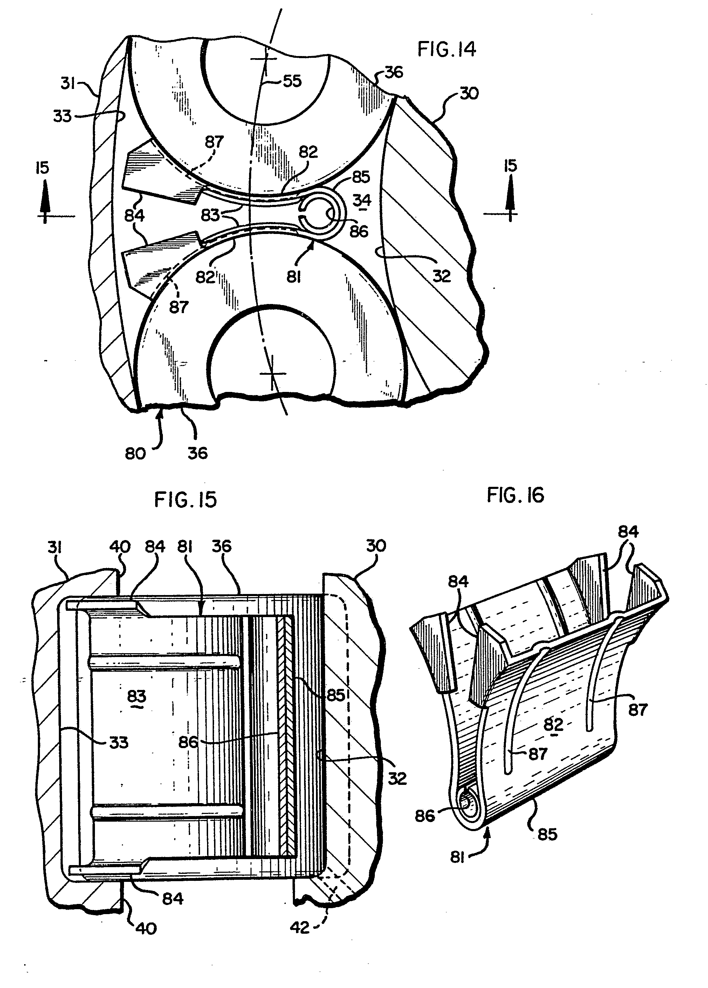

Figs. 14-16 show a fourth embodiment of the invention wherein a bearing unit 80 is provided with a separator 81 formed of a relatively lightweight sheet metal construction. As in the case of the third embodiment, the separator 81 is formed so that its respective concave bearing contact surfaces 82 embrace the rollers 36 radially inwardly and outwardly of the path followed by the center of the rollers 36 as they move about the inner raceway 32 as generally illustrated by the phantom line 55 in Fig. 14. Additionally, a pair of radially extending, parallel lubricating grooves 87 are formed in each of the bearing contact surfaces 82 to accommodate the development of an EHD lubricating film between the rollers and the separators.

As can be seen from the drawings, each of the separators 81 is provided with a pair of spaced leaf portions 83 having projecting outer edge or ear portions 84 at their distal ends disposed between the lodgements 40. This structure effectively entraps and secures the rollers 36 and the separators 81 within the assembly. In contrast to the solid separator constructions shown in the foregoing embodiments, the sheet metal construction utilized for the separator 81 has been found to be particularly desirable because it tends to dampen and abate loads on the rollers such as those resulting from the constant acceleration and deceleration of the rollers encountered when the bearing unit is used to support an orbiting shaft in a planetary transmission or the like. As shown in the drawings, the invention calls for interconnecting the spaced leaf portions 83 with a resilient central connecting portion 85 formed by wrapping a single sheet of metal forming the leaf portions 83 around a compressible split tube 86. This arrangement accommodates momentary deflection of the leaf portions 83 to dissipate predetermined impact loads on the bearing surfaces 82 by the rollers 36, and, in the event of greater impact loading, the split tube 86 is similarly momentarily compressed to dissipate those loads. In the embodiment shown, the entire separator 81 is fabricated from metal components. However, it is to be understood that other materials may be used provided they possess the necessary resilient properties as will be readily apparent to one skilled in the materials and bearing arts.

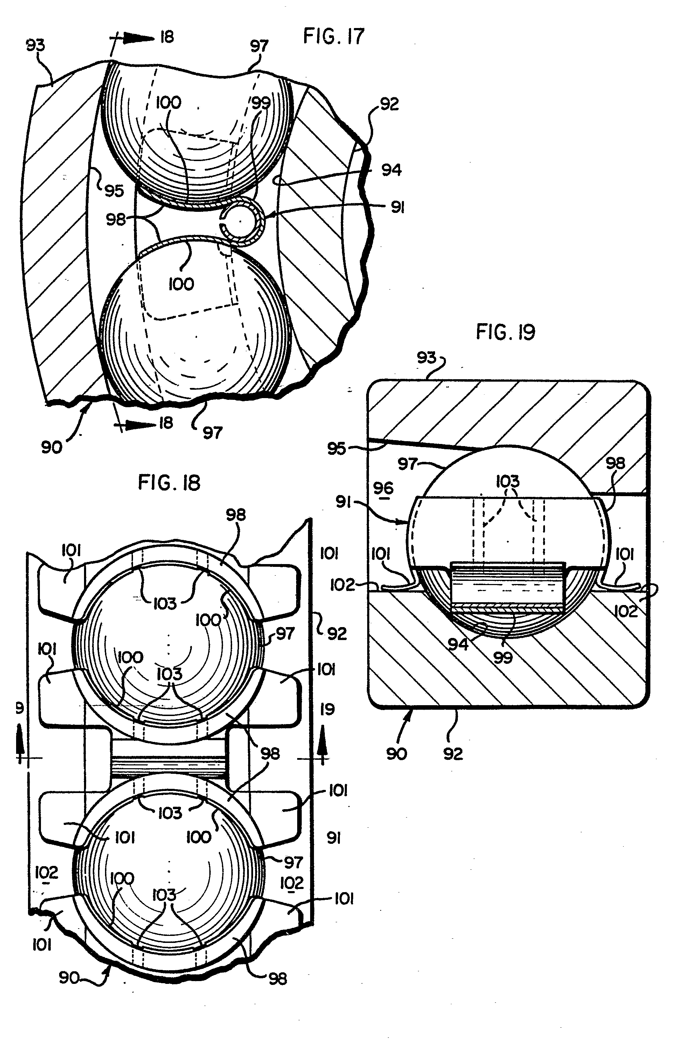

Figs. 17-19 illustrate a fifth embodiment of the invention wherein a ball bearing unit 90 is provided with separators 91. Each of the ball bearing units 90 includes inner and outer coaxial rings 92 and 93 forming respective inner and outer raceways 94 and 95 separated by an annular gap 96. As shown in the drawings, a plurality of spherical ball bearings 97 are engaged in the raceways 94 and 95 in a spaced annular array within the gap 96, and a plurality of free floating separators 91 are disposed within the array between each of the ball bearings 97.

As in the case of the fourth embodiment shown in Figs. 14-16, each of the separators 91 is formed of a relatively lightweight resilient sheet metal construction having a pair of spaced leaf portions 98 interconnected by a connecting portion 99 defining concave bearing surfaces 100 which engage the balls 97 in a generally contiguous fashion to retain the ball bearings and the separators within the assembly. A pair of radially extending parallel grooves 103 are formed in each of the bearing surfaces 100 to channel lubricant onto the bearing surfaces to effect an EHD lubricant film between the ball bearings and the separators. Additionally, as shown in the drawings, each of the leaf portions 98 is provided with a pair of outwardly projecting feet or slippers 101 which are adapted to slide along the inner faces 102 of the inner ring 92 to prevent twisting or turning of the separators 91 within the assembly during use.

From the foregoing it can be seen that the separators 91 promote the development and maintenance of an EHD film between the ball bearings and the separators to accommodate use of the bearing unit in high speed applications while at the same time utilizing a resilient construction which dampens and dissipates impact loading between the ball bearings. Moreover, as exemplified by this embodiment, it can be seen that any of the foregoing embodiments can be used to retain ball bearings, as well as rollers, provided of course that suitable modifications are made as will be readily apparent to one skilled in the bearing arts.

CLAIMS

1.      A high speed lubricated bearing unit, comprising: inner and outer coaxial members forming respective inner and outer raceways separated by an annular gap; a plurality of spaced rotary bodies engaged in the raceways in an annular array in said gap; a plurality of free floating separators alternately disposed within the array between each of the rotary bodies, said separators each having a concave bearing contact surface on each of its peripheral sides within the array slidlingly engaging its respective adjacent rotary body in a generally contiguous fashion to maintain a predetermined spacing between the rotary bodies within the array, each of said bearing surfaces having a radius of curvature greater than the radius of curvature of its respective adjacent rotary body; and at least one radially extending groove for channeling lubricant during use of the bearing unit between the bearing surface and said rotary body to form a lubricant film of a predetermined minimum thickness between the separators and the rotary bodies.

2.      The bearing unit of claim 1, wherein said bearing surfaces and the rotary bodies have a predetermined composite surface roughness in the range of approximately 0-20 percent of the minimum thickness of said lubricant film.

3.      The bearing unit of claim 1 or claim 2, wherein said bearing surfaces are coated with a material which is softer than said rotary bodies.

4. The bearing unit of any preceding claim, wherein said outer raceway is formed with a radially inwardly projecting lodgment axially retaining said rotary bodies between the raceways, said lodgment also preferably retaining said separators.

5. The bearing unit of any preceding claim, wherein said bearing surfaces each have a plurality of said grooves disposed in spaced parallel relation.

6. The bearing unit of any preceding claim, wherein said separators each have a radially outwardly convex outer surface slidably engaged in the outer raceway, the radius of curvature of said outer surface being less than the radius of curvature of said outer raceway to effect the formation of a lubricant collection zone ahead of each of the separators as it moves in the outer raceway during use of the bearing unit which feeds and maintains a second lubricant film of a predetermined minimum thickness between each of the separators and the outer raceway.

7. The bearing unit of claim 6, wherein said outer surfaces and the outer raceway have a predetermined composite surface roughness in the range of approximately 0-20 percent of the minimum thickness of said second lubricant film.

8. The bearing unit of claim 6 or claim 7, wherein at least one groove of each separator extends entirely across its associated bearing surface to channel lubricant from the inner raceway to the outer raceway during use of the bearing unit.

9.     The bearing unit of any preceding claim, including means for directing lubricant into the inner raceway.

10.     The bearing unit of any preceding claim, wherein said bearing surfaces embrace their respective rotary bodies radially inwardly and outwardly of the centers of said rotary bodies to radially retain each of the separators in a fashion securing the separators and rotary bodies in said annular array independent of the inner and outer raceways.

11.     The bearing unit of claim 10, wherein the minimum spacing between the rotary bodies engaging said bearing surfaces exists approximately halfway between the inner and outer raceways.

12.     The bearing unit of claim 10 or claim 11, wherein said separators each include an inner edge portion defining a lubricant collecting zone and a lubricant passage extending radially outwardly through the separator from said collecting zone to each of the bearing surfaces to channel lubricant from the inner raceway to the bearing surfaces, said passages preferably opening into each of said grooves.

13.     The bearing unit of any of claims 10 to 12, wherein said separators each have a radially outer edge portion spaced from the outer raceway, and said outer raceway being formed with a radially inwardly projecting lodgment axially retaining said outer edge portion to retain the separator between the raceways.

14.    The bearing unit of any of claims 1 to 5, wherein said separators each have a pair of spaced leaf portions forming the bearing surfaces of said separator and a central connecting portion interconnecting said leaf portions.

15.    The bearing unit of claim 14, wherein said leaf portions are formed of a resilient material to accommodate momentary deflection of said leaf portions to dissipate impact loads on the bearing surfaces by the rotary bodies during use of the bearing unit, and/or said central connecting portion is formed of a resilient material to accommodate momentary deflection of said leaf portions to dissipate impact loads on the bearing surfaces by the rotary bodies during use of bearing unit.

16.    The bearing unit of claim 14 or claim 15, wherein said separators are each of a relatively lightweight sheet metal construction.

17.    The bearing unit of any of claims 1 to 3, wherein the rotary bodies are spherical ball bearings and said separators each include means cooperative with one of the raceways to prevent rotation of the separator relative to the raceways.

18.    A planetary gearing apparatus for transmitting rotational energy from a prime mover to a torque load including a first shaft adapted to be connected to the prime mover, a carrier supported for rotation about said first shaft, a second shaft mounted on the carrier adapted to be connected with the torque load, and gear means rotationally coupling said first and second shafts, wherein a high speed lubricated bearing unit according to any preceding claim rotationally supports said second shaft on the carrier.

19.      The planetary gearing unit of claim 18, wherein said second shaft has a chamber formed within it and a passage extending between said chamber and the inner raceway; and including: lubricating means mounted on said carrier for injecting lubricant into said chamber whereby centrifugal forces acting on the lubricant during use of the gearing apparatus effect circulation of the lubricant through the passage from the chamber to the inner raceway to provide lubrication for the bearing unit.

0164968

FIG.1

FIG.2

0164968

FIG.3

FIG.4

0164968

**FIG.5**

**FIG.6**

**FIG. 7**

0164968

FIG. 8

FIG. 9

FIG. 10

0164968

FIG. 11

FIG. 12

FIG. 13

FIG.14

FIG.15

FIG.16

0164968

FIG. 17

FIG. 19

FIG. 18

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 740 703 (ROLLS-ROYCE LTD.)<br>* Page 2, lines 75-94 * | 1,6,10,11,17 | F 16 C 19/20<br>F 16 C 19/40<br>F 16 C 33/66 |
| A | * Page 3, line 95; figures * | 3 | |
| | --- | | |
| Y | DE-C- 499 378 (G. & J. JAEGER et al.)<br>* Whole document * | 1 | |
| A | | 5,6,10,11,12,17 | |
| | --- | | |
| Y | DE-C- 523 480 (G. & J. JAEGER et al.)<br>* Whole document * | 1,5,8,11,17 | TECHNICAL FIELDS SEARCHED (Int. Cl.4) |
| | --- | | |
| A | FR-A-2 355 201 (DAIMLER-BENZ AG)<br>* Whole document * | 1,6,10,11,17 | F 16 C |
| | --- | | |
| A | US-A-2 969 267 (K.E.A. GÖTHBERG)<br><br>* Whole document * | 1,10,11,14-17 | |
| | ---     -/- | | |

The present search report has been drawn up for all claims

| Place of search | Date of completion of the search | Examiner |
|---|---|---|
| THE HAGUE | 27-09-1985 | BEGUIN C.P. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-3 782 795 (J.C. RICHEY et al.)<br>* Whole document * | 1,9-11,14-17 | |
| A | FR-A-1 215 359 (M. ROY H. ZEILMAN) | | |
| A | CH-A- 416 228 (W. ZAUGG) | | |
| A | DE-C- 255 713 (J. NEWMANN) | | |

TECHNICAL FIELDS SEARCHED (Int. Cl.4)

The present search report has been drawn up for all claims

| Place of search | Date of completion of the search | Examiner |
|---|---|---|
| THE HAGUE | 27-09-1985 | BEGUIN C.P. |